# EUROPEAN PATENT APPLICATION

(11) **EP 2 664 913 A1**
(43) Date of publication of application: **20.11.2013**
(21) Application number: 13168382.3
(22) Date of filing: 17.05.2013
(51) Int. Cl.: G01N 27/327

(54) **Biosensor**

(30) Priority: 18.05.2012 JP 2012114787; 07.05.2013 JP 2013097589
(71) Applicant: Arkray, Inc., Minami-ku Kyoto-shi Kyoto 601-8045 (JP)
(72) Inventor: Kaneda, Hisashi, Kyoto 602-0008 (JP); Ishiki, Tatsuya, Shiga 520-3306 (JP)
(74) Representative: MacDougall, Alan John Shaw

(57) **Abstract**

The present invention provides a biosensor capable of preventing a sample from flowing out of the air hole to the outside with superior accuracy. The biosensor of the present invention is a biosensor including: a first substrate having an air hole; and a second substrate, the first and second substrates being laminated on each other, wherein the biosensor has a sample flow path between the first and second substrates, in a sample flow direction in the flow path, an upstream end of the flow path is in communication with a sample introduction port, and a downstream end of the flow path is in communication with the air hole, an upper surface of the flow path is formed of a surface of the first substrate facing the second substrate, and a region on the introduction port side of the upper surface of the flow path is a hydrophilic region, and a region on the air hole side of the upper surface of the flow path is a water-repellent region.

## Description

### Technical Field

The present invention relates to a biosensor.

### Background Art

As an analytical tool for use in analysis of a target in a sample, a biosensor is used widely. Generally, in the biosensor, an upper substrate having a through hole and a lower substrate are laminated on each other via a spacer having a slit, and a sample introduction port and a sample flow path are formed of the slit of the spacer. The through hole functions as an air hole by causing the flow path and the through hole of the upper substrate to be in communication with each other, whereby a sample can be drawn from the introduction port and moved from the introduction port toward the air hole in the flow path of the biosensor by the capillary phenomenon. Then, when the sample reaches a reagent section disposed in the flow path, a target in the sample reacts with a reagent in the reagent section. The target can be analyzed by detecting this reaction.

However, when the upper substrate is provided with an air hole which is in communication with the flow path, and a sample is moved by the capillary phenomenon as described above, the sample is passed through the flow path, resulting in flowing the sample out of the air hole to the outside of the biosensor in some cases. Such phenomenon tends to occur specifically when the sample has a low viscosity and a low surface tension. When the sample flows out of the air hole as described above, the concentration of the reagent in the flow path is reduced, resulting in a problem of reduction in analysis accuracy, for example.

In order to try to solve such problem, a method for subjecting the periphery or the inner peripheral surface of the air hole on the outer surface of the upper substrate of the biosensor to a water-repellent treatment (patent document 1). However, even by the method, the sample flows out of the air hole in some shapes of the biosensor.

### Prior Art Document

### Patent Document

Patent Document 1: Japanese Patent No. 4236538

Hence the present invention is intended to provide a biosensor capable of preventing a sample from flowing out of the air hole with superior accuracy, for example.

### Summary of Invention

According to one aspect, the present invention provides a biosensor including: a first substrate having an air hole; and a second substrate, the first and second substrates being laminated on each other, wherein the biosensor has a sample flow path between the first and second substrates, in a sample flow direction in the flow path, an upstream end of the flow path is in communication with a sample introduction port, and a downstream end of the flow path is in communication with the air hole, an upper surface of the flow path is formed of a surface of the first substrate facing the second substrate, and a region on the introduction port side of the upper surface of the flow path is a hydrophilic region, and a region on the air hole side of the upper surface of the flow path is a water-repellent region.

### Effects of the Invention

According to the biosensor of the present invention, a sample can be prevented from flowing out of the air hole to the outside with superior accuracy, for example. Therefore, according to the biosensor of the present invention, a target can be analyzed with superior accuracy. Thus, the present invention is really useful in a clinical field, a biochemical field, and the like, for example.

### Brief Description of Drawings

[FIG. 1] FIG. 1 is a perspective view showing an example of a biosensor according to the present invention.
[FIG. 2] FIG. 2 is another perspective view showing the example of a biosensor according to the present invention.
[FIG. 3] FIGs. 3A to 3C are plan views each showing an example of a first substrate in a biosensor according to the present invention.
[FIG. 4] FIG. 4 is a perspective view showing another example of a biosensor according to the present invention.
[FIG. 5] FIG. 5 is another perspective view showing the another example of a biosensor according to the present invention.
[FIG. 6] FIGs. 6A and 6B are perspective views each showing an example of a second substrate in a biosensor according to the present invention.
[FIG. 7] FIG. 7A is a photograph showing the periphery of an air hole of a first substrate in the example of the present invention. FIG. 7B is a photograph showing the periphery of an air hole of a first substrate in the comparative example.

### Description of Embodiments

The biosensor according to the present invention is, as mentioned above, a biosensor including: a first substrate having an air hole; and a second substrate, the first and second substrates being laminated on each other, wherein the biosensor has a sample flow path between the first and second substrates, in a sample flow direction in the flow path, an upstream end of the flow path is in communication with a sample introduction port, and a downstream end of the flow path is in communication with the air hole, an upper surface of the flow path is formed of a surface of the first substrate facing the second substrate, and a region on the introduction port side of the upper surface of the flow path is a hydrophilic region, and a region on the air hole side of the upper surface of the flow path is a water-repellent region.

In the biosensor according to the present invention, it is required that, in a region forming the upper surface of the flow path on the surface of the first substrate facing the second substrate, a region on the introduction port side is a hydrophilic region, and a region on the air hole side is a water-repellent region. As described above, the first substrate has the air hole, and a region on the introduction port side is a hydrophilic region in the biosensor according to the present invention. Thus, a sample introduced from the introduction port moves toward the air hole side in the flow path. Moreover, a region on the air hole side of the first substrate is a water-repellent region. Thus, the moved sample can be prevented from leaking out of the flow path to the air hole. As long as the first substrate has the air hole, the hydrophilic region, and the water-repellent region under the above-mentioned conditions as mentioned above, the other configuration and conditions of the present invention are not at all limited. In the present invention, water-repellent properties encompass non-hydrophilicity or hydrophobicity, for example.

In the present invention, for example, it can be said that the water-repellent region has "relatively high water-repellent properties" compared with the hydrophilic region. Moreover, it can be said that the water-repellent region has "relatively low hydrophilicity" compared with the hydrophilic region. In the present invention, with respect to the term "water-repellent" of the water-repellent region and the term "hydrophilic" of the hydrophilic region, it can also be said that the former means having "relatively high water-repellent properties" compared with the latter, and the latter means having "relatively high hydrophilicity" compared with the former, for example.

In the present invention, the surface of the first substrate facing the second substrate is referred to as a lower surface, and the surface opposite thereto is referred to as an upper surface, and a surface perpendicular to the lower and upper surfaces is referred to as a side surface. The surface of the second substrate facing the first substrate is referred to as an upper surface, and the surface opposite thereto is referred to as a lower surface, and a surface perpendicular to the upper and lower surfaces is referred to as a side surface. In the biosensor according to the present invention, the topmost surface parallel to the above-described surfaces of the components is referred to as a surface, and a surface perpendicular to the above-described surfaces is referred to as a side surface. Specifically, for example, the surface on the first substrate side is referred to as an upper surface, and the surface on the second substrate side is referred to as a lower surface.

In the present invention, a direction from the introduction port toward the air hole in the flow path is a sample flow direction. In the present invention, a direction along which the sample flow path is formed, i.e., the sample flow direction is referred to as a longitudinal direction. On the surface of the biosensor, a direction perpendicular to the longitudinal direction is referred to as a width direction, and a direction perpendicular to the longitudinal direction and the width direction is referred to as a thickness direction. Along the longitudinal direction, the introduction port side is upstream in the sample flow direction, and the other side is downstream in the sample flow direction. With respect to the sizes of the biosensor according to the present invention and components thereof, the length in the longitudinal direction is referred to as a length, the length in the width direction is referred to as a width, and the length in the thickness direction is referred to as a thickness, for example.

The use of the biosensor according to the present invention is not particularly limited, and it can be used in analysis of a target in a sample. The biosensor according to the present invention can be applied to a method utilizing a phenomenon of moving a sample introduced from an introduction port toward an air hole in a flow path, for example.

In the biosensor according to the present invention, the sample flow path is formed by laminating the first and the second substrates on each other, for example. The flow path can be formed using a substrate having a groove to be a flow path or a spacer having a slit to be a flow path, for example.

In the former case, it is preferred that a second substrate having a groove is used, for example. Specifically, the groove is formed from the end of the second substrate toward the middle along the longitudinal direction on the surface of the second substrate, for example. In this case, for example, when the second substrate having a groove and the first substrate are laminated on each other, a flow path is formed of the groove of the second substrate and the lower surface of the first substrate positioned on the groove (the surface facing the second substrate), and an opening exposing to the side surface on the upstream side becomes the sample introduction port.

In the latter case, the biosensor according to the present invention further includes the spacer having a slit. In the spacer, the slit is formed from the end toward the middle along the longitudinal direction, for example. In this case, for example, the first and second substrates are laminated on each other via the spacer. Thus, a space formed of the first and second substrates and the slit of the spacer becomes the sample flow path, and an opening formed of the slit of the spacer becomes the sample introduction port. In the spacer, the surface facing the first substrate is referred to as an upper surface, the surface facing the second substrate is referred to as a lower surface, and a surface perpendicular to the upper and lower surfaces is referred to as a side surface.

In the present invention, the upper surface of the flow path is, as mentioned above, formed of the lower surface of the first substrate, a region on the introduction port side is a hydrophilic region, and a region on the air hole side is a water-repellent region. In the present invention, as long as a region from the sample introduction port to the upstream end of the air hole on the upper surface of the flow path has a hydrophilic region and a water-repellent region under the above-mentioned conditions, hydrophilicity and water-repellent properties in the other region are not particularly limited.

In the present invention, only a region on the air hole side of the upper surface of the flow path in the lower surface of the first substrate or the entire periphery of the air hole may be the water-repellent region, for example. As long as a region on the introduction port side of the upper surface of the flow path in the first substrate is the hydrophilic region, the other may have water-repellent properties, for example. The first substrate can be in the form in which the lower surface facing the second substrate includes a water-repellent region such as mentioned above, and the surface opposite thereto and/or the inner surface (the inner peripheral surface) of the through hole does not include the water-repellent region, for example.

In the biosensor according to the present invention, the second substrate and the spacer may have hydrophilicity or water-repellent properties, for example. Specifically, it is preferred that regions of the second substrate and the spacer, corresponding to the exposed surface inside the flow path have water-repellent properties. In this case, as long as a region on the introduction port side in an upper part of the flow path on the exposed surface inside the flow path of the biosensor according to the present invention is a hydrophilic region, the other region of the exposed surface may have water-repellent properties, for example. Specifically, it is preferred that a region of the lower surface formed of the surface of the second substrate facing the first substrate except the reagent section is a water-repellent region.

In the present invention, as long as the water-repellent region of the first substrate is treated so as to exert water-repellent properties, the method of the treatment is not at all limited, for example. Examples of the treatment include a chemical treatment and a physical treatment. The water-repellent properties may be imparted to the surface of the substrate by the treatment or may be achieved by deleting hydrophilicity of a hydrophilic substrate used as the substrate by the treatment, for example.

The chemical treatment can be, for example, a method using a water-repellent material, and it is preferred that the region contains the water-repellent material by the method. The chemical treatment can be, for example, a method in which the water-repellent material is applied to a predetermined region. The method of the application is not particularly limited, and examples thereof include a screen printing method and a coating method. Examples of the coating method include known methods such as a reverse coating method, a gravure coating method, a rod coating method, a comma coating method, and a die coating method.

The water-repellent material is, for example, a material exerting water-repellent properties and/or hydrophobicity, and examples thereof include a resin, an ink, oil, and wax. Examples of the resin include silicone resins, hydrocarbon resins, fluorocarbon resins, polyethyleneimine-octadecylisocyanate resins, poly(metha)acrylic acid ester resins, polystyrene resins, polyethylene resins, and polypropylene resins. The silicone resin is, for example, preferably, dialkylpolysiloxane such as dimethylpolysiloxane, polyorganosiloxane such as phenylmethylpolysiloxane or fluorine-containing dialkylpolysiloxane, any of mixtures thereof or a cross-linked form of copolymers thereof, an organic resin such as an acrylic resin, an epoxy resin, or an urethane resin, having the polyorganosiloxane in the side chain thereof, or a silicone resin and specifically preferably a cross-linked form of the polyorganosiloxane obtained by cross-linkage by an additional reaction. The ink can be, for example, a resist ink. The oil can be, for example, a silicone oil. The wax can be, for example, a resin wax, and examples of the resin wax include the above-mentioned resins.

The physical treatment is, for example, a method in which a predetermined region of the first substrate is physically treated and can be laser processing.

Members of the first substrate, the second substrate, and the spacer in the biosensor according to the present invention are not particularly limited, and examples thereof include films such as a resin, glass, paper, ceramics, and rubber. Examples of the resin include polyester, polyolefin, polyamide, polyesteramide, polyether, polyimide, polyamideimide, polystyrene, polycarbonate, poly-p-phenylenesulfide, polyetherester, polyvinylchloride, and poly(metha)acrylic acid ester. Moreover, any of copolymers, blended polymers, and crosslinked polymers thereof can also be used.

In the case where the biosensor according to the present invention includes the spacer, the spacer may be formed in advance and is laminated together with the first and second substrates, for example. The spacer may be formed directly on one of the first and second substrates, and then, the other substrate may be laminated thereon.

The use of the biosensor according to the present invention is not particularly limited and can be used in analysis of a target in a sample as mentioned above. In the biosensor according to the present invention, the types of a sample and a target and a method for analyzing a target are not at all limited, for example. As mentioned above, the biosensor according to the present invention can be applied to a method utilizing a phenomenon of moving a sample introduced from an introduction port in the flow path, for example.

The biosensor according to the present invention can be used in a method in which a target in a sample is analyzed by detecting a signal derived from the target, for example. The signal is not particularly limited and may be, for example, an electrochemical signal or an optical signal. That is, the present invention may be, for example, a biosensor for electrochemically detecting a target or a biosensor for optically detecting a target, for example. Moreover, the latter may be a biosensor for detection by visual check, for example.

In the case where the biosensor according to the present invention is a biosensor for electrochemical detection, the biosensor preferably further includes an electrode system, for example. The electrode system preferably includes a working electrode and a counter electrode, for example. When an electrochemical signal is detected, the electrochemical signal such as a current can be measured by the working electrode through applying a voltage between the working and counter electrodes, for example.

The electrochemical signal can be detected by a detector connected to the working electrode, for example. The detector may be disposed inside or outside the biosensor, for example. In the latter case, for example, the detector may be connected to the biosensor before detecting the signal or at the time of detecting the signal, for example. The working electrode may be connected to the detector via a terminal, for example. The detector is not particularly limited and can be, for example, an ammeter and may include a current/voltage converter, an A/D converter, an arithmetic device, and the like, for example.

The electrode system may be, for example, an electrode assembly of working and counter electrodes or may include two or more electrode assemblies. In the latter case, each electrode assembly may include working and counter electrodes, or a counter electrode of an electrode assembly may also serve as a counter electrode of the other electrode assembly, for example.

A position of the electrode system to be disposed is not particularly limited, and for example, it is preferred that the position is a position in which the electrode system is partially in contact with the flow path, and the electrode system is partially exposed to the sample flow path. The electrode system may be formed in the second substrate, the first substrate, or both of them, for example. Moreover, a working electrode may be formed in one of the first and second substrates, and a counter electrode may be formed in the other substrate. It is more preferred that the second substrate has the electrode system, and specifically the electrode system is disposed on the surface of the second substrate facing the first substrate.

Among them, it is preferred that in the second substrate of the biosensor according to the present invention, the electrode system is disposed in a position in which it is partially in contact with the flow path, and the electrode system is partially exposed to the sample flow path, for example. In the case where the biosensor according to the present invention has the electrode system, positions of the hydrophilic region and the water-repellent region on the upper surface of the flow path are not particularly limited. Specifically, it is preferred that on the upper surface of the flow path, a region from the introduction port to the exposed electrode system is the hydrophilic region, and a region from the downstream end of the hydrophilic region to the upstream end of the air hole is the water-repellent region, for example. A region on the downstream side of the upstream end of the air hole is not particularly limited, may have hydrophilicity or water-repellent properties, and preferably has water-repellent properties.

It is preferred that the surface of the first substrate facing the second substrate and the surface of the second substrate facing the first substrate have insulation properties, for example. The entire first and second substrates may be formed of an insulating material, or the surface of the first substrate facing the second substrate and the surface of the second substrate facing the first substrate may be formed of an insulating material, for example. In the latter case, for example, they may be caused to have insulating properties by laminating an insulating layer on a surface of a non-insulating or insulating substrate.

The insulating material is not particularly limited, and examples thereof include a resin, glass, paper, ceramics, and rubber. Examples of the resin include polyethylene, polypropylene, polystyrene, polyvinyl chloride, polyethylene terephthalate, polymethacrylate, polyamide, a saturated polyester resin, a thermoplastic resin such as an acrylic resin, an urea resin, a melamine resin, a phenol resin, an epoxy resin such as glass epoxy, and a thermosetting resin such as a unsaturated polyester resin.

Each of the first and second substrates may be, for example, a transparent member. The first substrate and/or the second substrate preferably is a transparent member, and specifically the first substrate preferably is a transparent member because the internal state of the biosensor according to the present invention can be visually checked, for example.

The material of the working electrode is not particularly limited and is, for example, preferably a conductive material which itself is not oxidized in an electron transfer. Examples of the material of the counter electrode include conductive materials such as palladium, gold, platinum, and carbon. The electrode system can be formed by a known method such as a screen printing method, a coating method, or a vapor deposition method, for example.

In the case where the biosensor according to the present invention is a biosensor for use in optical detection, materials of the first and second substrates are not particularly limited, and examples thereof include examples shown for the biosensor for use in electrochemical detection, for example.

The optical signal can be detected by a detector, for example. The detector may be disposed inside or outside the biosensor, for example. The detector is not particularly limited and can be, for example, a spectrophotometer and may include an arithmetic device. Examples of the optical signal include a chromogenic signal and a fluorescence signal, and the optical signal can be detected as an absorbance, a reflectance, a fluorescence intensity, or the like.

The biosensor according to the present invention may include a reagent section containing a reagent which causes a signal derived from a target in the sample to generate, for example. The type of the reagent is not particularly limited and can be decided as appropriate according to the types of the target and the signal.

A position of the reagent to be contained in the biosensor according to the present invention is not particularly limited and preferably is a position in which the reagent is in contact with the flow path, for example. Specifically, for example, the flow path preferably further incudes a reagent section containing a reagent. The reagent section may be disposed on the first substrate side of the flow path, the second substrate side of the flow path, or both of them, for example. In the case where the biosensor according to the present invention has the reagent section, it is preferred that the lower surface of the flow path is formed of the surface of the second substrate facing the first substrate, and a region of the lower surface except the reagent section is a water-repellent region, for example.

In the case where the biosensor according to the present invention includes the electrode system, a position of the reagent to be disposed is, for example, preferably a position in which the reagent is in contact with the flow path and the electrode system, for example, and is specifically preferably a position on the electrode system exposing to the sample flow path. That is, for example, the electrode system may be partially exposed to the sample flow path. In the biosensor according to the present invention, the second substrate may have a reagent section containing a reagent on the exposed electrode system of the second substrate, for example. In this case, for example, it is preferred that the lower surface of the flow path is formed of the surface of the second substrate facing the first substrate, and a region of the lower surface except the reagent section is a water-repellent region.

The embodiments of the biosensor according to the present invention are described in details with reference to schematic views thereof. The present invention, however, is not limited by these embodiments.

### (First embodiment)

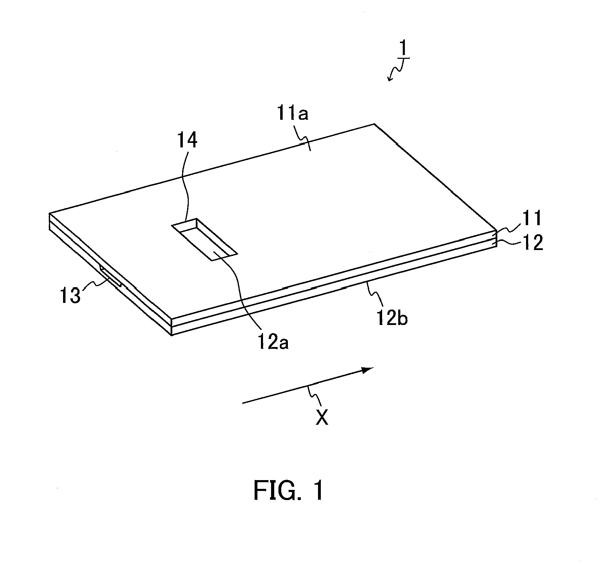

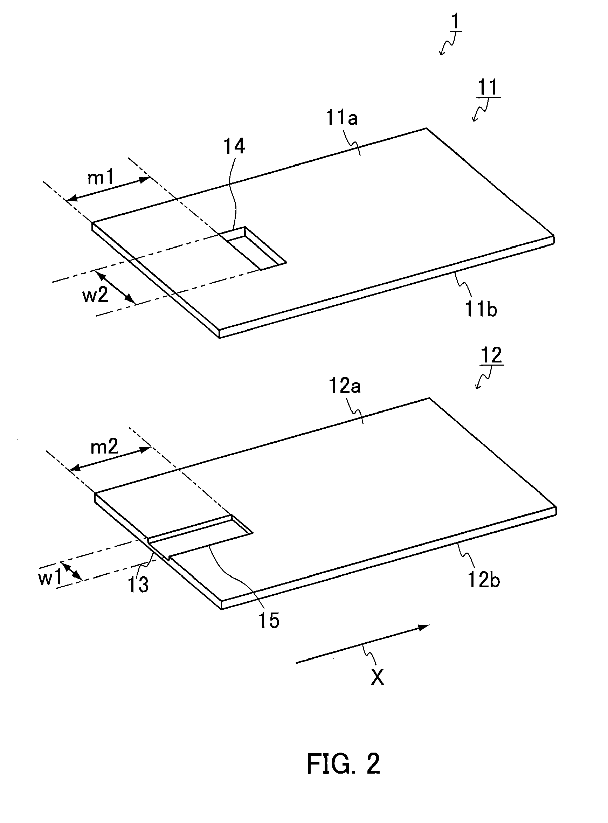

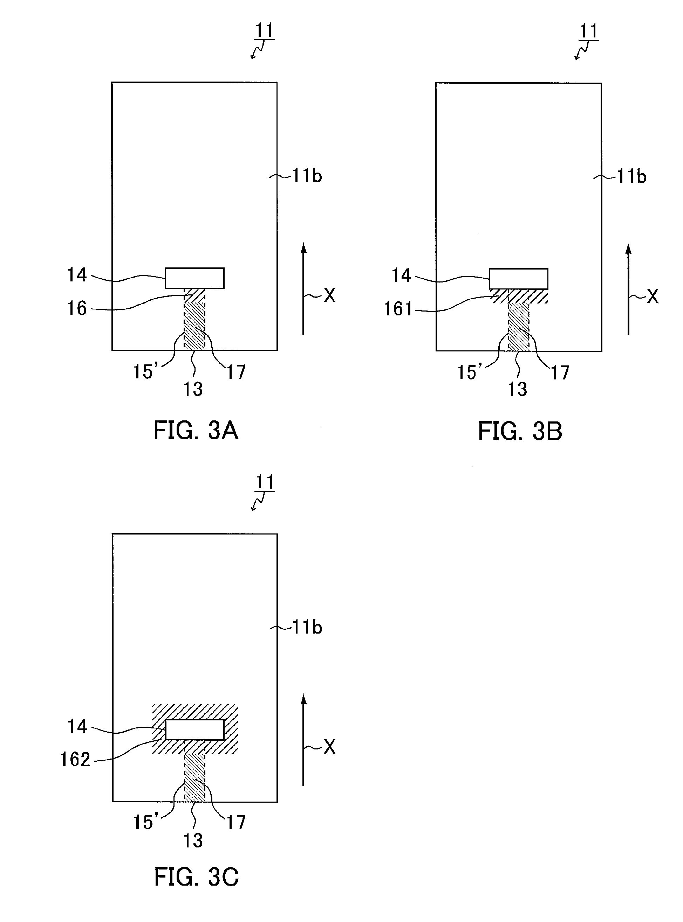

Schematic views of FIGs. 1 to 3C show an example of a biosensor according to the present invention. FIG. 1 is a perspective view of a biosensor 1. FIG. 2 is a perspective view of the biosensor 1 showing components individually. FIGs. 3A to 3C are plan views of a first substrate 11 of the biosensor 1. In FIGs. 1 to 3C, identical parts are denoted by identical numerals. In each of FIGs. 1 to 3C, an arrow X shows a sample flow direction (longitudinal direction), and the tip of the arrow represents the downstream side. With respect to the sizes of the biosensor 1 and components thereof, the length in the longitudinal direction is a length, the length in the width direction perpendicular to the longitudinal direction on the surface of the biosensor is a width, and the length in the direction perpendicular to the longitudinal direction and the width direction is a thickness.

As shown in FIGs. 1 and 2, the biosensor 1 includes a first substrate 11 and a second substrate 12. As shown in FIG. 2, the first substrate 11 has a through hole 14, and the second substrate 12 has a concave groove 15 to be a flow path from the upstream end toward the middle in the flow direction (X). As shown in FIG. 1, the first substrate 11 and the second substrate 12 are laminated on each other so that the lower surface 11b of the first substrate 11 faces the upper surface 12a of the second substrate 12, and thus, the biosensor 1 is formed. In the biosensor 1, a flow path 15 is formed of the groove 15 of the second substrate 12 and the lower surface 11b of the first substrate 11. In the flow direction (X), the upstream end of the flow path 15 is a sample introduction port 13, and the through hole 14 of the first substrate 11 is an air hole to the flow path 15. The upstream end of the flow path 15 is in communication with the sample introduction port 13, and the downstream end of the flow path 15 is in communication with the air hole 14. The upper surface 11a of the first substrate 11 is an upper exposed surface of the biosensor 1, and the lower surface 12b of the second substrate 12 is a lower exposed surface of the biosensor 1.

As mentioned above, the first substrate 11 and the second substrate 12 are laminated on each other, so that a part of the lower surface 11b forms the upper surface 15' of the flow path 15. As shown in FIG. 3A, a region on the sample introduction port 13 side of the upper surface 15' of the flow path 15 in the first substrate 11 is a hydrophilic region 17, and a region on the air hole 14 side of the upper surface 15' of the flow path 15 in the first substrate 11is a water-repellent region 16.

The sizes and shapes of the biosensor 1 and the components thereof are not particularly limited and can be shown below, for example.

The length of the first substrate 11 can be, for example, from 5 to 50 mm, from 20 to 40 mm, or from 29 to 31 mm. The width of the first substrate 11 can be, for example, from 1 to 20 mm, from 3 to 10 mm, or from 6 to 8 mm. The thickness of the first substrate 11 can be, for example, from 5 to 1000 µm, from 200 to 500 µm, or from 250 to 350 µm.

The length of the air hole 14 can be, for example, from 0.1 to 5 mm, from 0.2 to 1 mm, or from 0.4 to 0.6 mm. The width (w2 in FIG. 2) of the air hole 14 can be, for example, from 0.5 to 6 mm, from 1.5 to 4 mm, or from 2 to 3 mm. The position of the air hole 14 can be shown by the length (m1 in FIG. 2) from the upstream end of the first substrate 11 to the downstream end of the air hole 14 in the flow direction (X). The length of the air hole 14 can be, for example, from 1 to 5 mm, from 2 to 4 mm, or from 2.5 to 3.5 mm. The shape of the air hole 14 is not particularly limited, and examples thereof include a shape having four right angles such as rectangular and circular such as oval. By setting the size, i.e., the length and the width of the air hole in the above-mentioned ranges as described above, the sample can be further prevented from flowing out of the air hole, for example.

The length of the water-repellent region 16 on the upper surface 15' of the flow path 15 can be, for example, from 0.1 to 3 mm, from 0.5 to 2 mm, or from 0.8 to 1.2 mm. The width of the water-repellent region 16 is not particularly limited and is, for example, the same as or longer than the width of the flow path or the same or longer than the width of the air hole 14. The width can be, for example, from 1 to 7 mm, from 2 to 5 mm, or from 2.5 to 3.5 mm. The size of the hydrophilic region 17 on the upper surface 15' of the flow path 15 is not particularly limited and can be decided according to the water-repellent region 16, for example. The sample can be prevented sufficiently from flowing out of the air hole by providing the biosensor with the water-repellent region as described above even when the amount of a sample to be flown into is in excess of the volume capable in the biosensor, or introduction efficiency of a sample is increased, for example.

The length of the second substrate 12 can be, for example, from 5 to 50 mm, from 20 to 40 mm, or from 29 to 31 mm. The width of the second substrate 12 can be, for example, from 1 to 20 mm, from 3 to 10 mm, or from 6 to 8 mm. The thickness of the second substrate 12 can be, for example, from 5 to 1000 µm, from 200 to 500 µm, or from 250 to 350 µm.

The length (m2 in FIG. 2) of the flow path 15 in the second substrate 12 can be, for example, from 1.1 to 10 mm, from 1.5 to 4.5 mm, or from 2 to 4 mm. The width (w1 in FIG. 2) of the flow path 15 can be, for example, from 1 to 10 mm, from 2 to 3.5 mm, or from 1.5 to 2.5 mm. The depth of the flow path 15 can be, for example, from 5 to 1000 µm, from 50 to 100 µm, from 60 to 90 µm, from 65 to 85 µm, or from 70 to 80 µm. In the known biosensor, the depth of a flow path is generally set to 100 µm or more. In the present invention, by setting the depth of the flow path to less than 100 µm as mentioned above, a sample introduced into the flow path is prone to be further drawn into the hydrophilic region on the upper surface of the flow path, for example. Thus, it becomes easier to supply the sample into the biosensor.

In the present embodiment, the lower surface of the flow path 15, i.e., the bottom surface of the groove 15 in the second substrate 12 preferably is a water-repellent region. Moreover, in the case where the flow path 15 has a reagent section, a region of the lower surface of the flow path 15 except the reagent section preferably is a water-repellent region. By causing the lower surface of the flow path to be a water-repellent region as described above, a sample introduced into the flow path is prone to be further drawn into the hydrophilic region on the upper surface of the flow path. Thus, it becomes easier to supply the sample into the biosensor. The side surfaces of the flow path 15, i.e., the side surfaces of the groove 15 of the second substrate 12 may be caused to be water-repellent regions.

A relationship between the width (w1) of the flow path and the width (w2) of the air hole is not particularly limited and can be, for example, a relationship satisfying w1 < w2, w1 = w2, or w1 > w2. According to the present invention, a sample introduced into the flow path can be further prevented from flowing out of the air hole even when the width of the air hole and the width of the flow path are set so as to satisfy the condition "w1 < w2".

The entire length of the biosensor 1 can be, for example, from 5 to 50 mm, from 20 to 40 mm, or from 29 to 31 mm. The entire width of the biosensor 1 can be, for example, from 1 to 20 mm, from 3 to 10 mm, or from 6 to 8 mm. The entire thickness of the biosensor 1 can be, for example, from 10 to 2000 µm, from 400 to 1000 µm, or from 500 to 700 µm.

It can be said that the volume of the inner space through which a sample passes in the biosensor 1 is the volume of an inner space from the sample introduction port 13 to the air hole 14 in the flow path 15, for example. The volume of the biosensor 1 can be, for example, from 0.1 to 10 µL, from 0.15 to 0.5 µL, from 0.2 to 0.45 µL, from 0.2 to 0.4 µL, or from 0.25 to 0.35 µL. The amount of a sample to be supplied into the biosensor 1, i.e., the amount of a sample capable in the biosensor 1 can be, for example, from 0.1 to 10 µL, from 0.15 to 0.5 µL, or from 0.2 to 0.4 µL. In the known biosensor, the inner volume (the volume of the flow path) is generally set to 0.5 µL or more. In the present invention, the inner volume can be set to less than 0.5 µL which is small, for example. Therefore, for example, in the case where a sample to be analyzed by the biosensor is a biological sample such as blood, suffering of subjects at the time of collecting the samples can be sufficiently alleviated. Even when the amount of a sample capable in the biosensor is set to be small by reducing the volume of the inner space of the biosensor, the sample can be sufficiently prevented from flowing out of the air hole because a region on the air hole side has a water-repellent region as mentioned above.

Examples of the shape of the water-repellent region 16 in the first substrate 11 includes the shapes shown in FIGs 3B and 3C in addition to FIG. 3A. In FIG. 3B, the width of the water-repellent region 161 is the same as that of the air hole 14. The width of the water-repellent region 161 may be longer than that of the air hole 14, for example. In FIG. 3C, the water-repellent region 162 is formed in the periphery of the air hole 14.

### (Second embodiment)

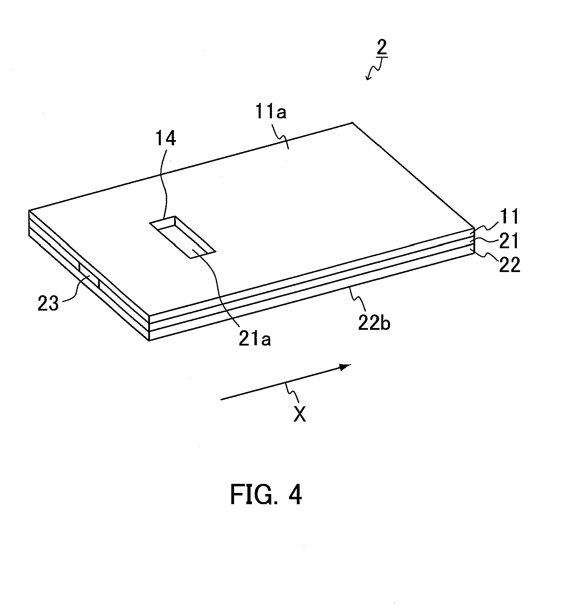

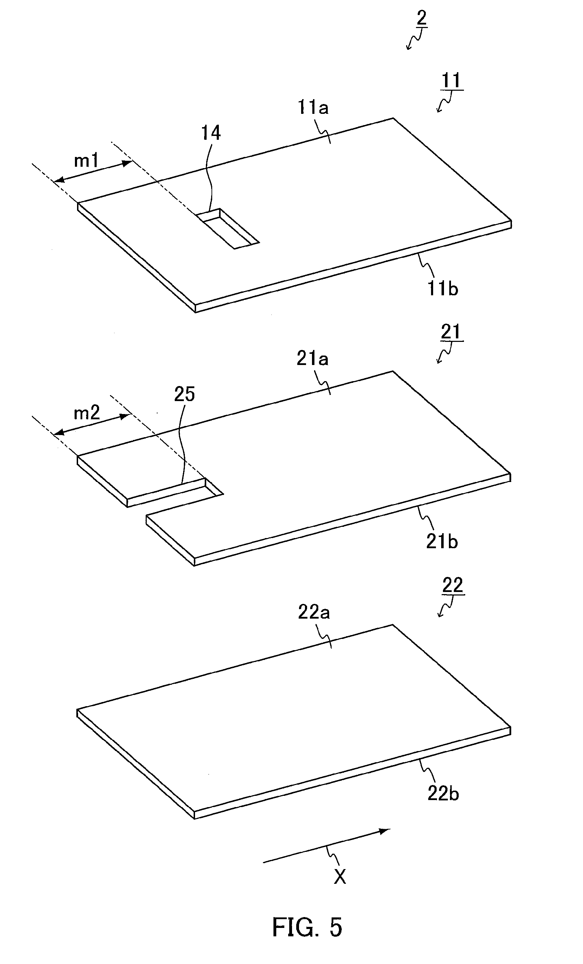

Schematic views of FIGs. 4 and 5 show an example of an embodiment of a biosensor including a spacer according to the present invention. FIG. 4 is a perspective view of a biosensor 2. FIG. 5 is a perspective view of the biosensor 2 showing components individually. In FIGs. 4 and 5, identical parts are denoted by identical numerals. Unless otherwise shown, the second embodiment is the same as the first embodiment, and the description of the first embodiment can be used to describe the second embodiment, for example.

As shown in FIGs. 4 and 5, the biosensor 2 includes a first substrate 11, a spacer 21, and a second substrate 22. As shown in FIG. 5, the first substrate 11 is the same as that of the first embodiment, the spacer 21 has a slit 25 to be a flow path from the upstream end toward the middle in the flow direction (X), and the upper surface 22a of the second substrate 22 is flat. Then, as shown in FIG. 4, the first substrate 11 and the second substrate 22 are laminated on each other via the spacer 21 so that the lower surface 11b of the first substrate 11 faces the upper surface 22a of the second substrate 22. Thus, the biosensor 2 is formed. In the biosensor 2, the flow path 25 is formed of the lower surface 11b of the first substrate 11, the slit 25 of the spacer 21, and the upper surface 22a of the second substrate 22. In the flow direction (X), the upstream end of the flow path 25 is a sample introduction port 23, and the through hole (air hole) 14 of the first substrate 11 is an air hole to the flow path 25. The upstream end of the flow path 25 is in communication with the sample introduction port 23, and the downstream end of the flow path 25 is in communication with the air hole 14. The upper surface 11a of the first substrate 11 is an upper exposed surface of the biosensor 2, and the lower surface 22b of the second substrate 22 is a lower exposed surface of the biosensor 2.

The sizes and shapes of the biosensor 2 and the components thereof are not particularly limited and can be shown as follows, for example. Unless otherwise shown, the description of the first embodiment can be used to describe the second embodiment, for example.

The length of the spacer 21 can be, for example, from 5 to 50 mm, from 20 to 40 mm, or from 29 to 31 mm. The width of the spacer 21 can be, for example, from 1 to 20 mm, from 3 to 10 mm, or from 6 to 8 mm. The thickness of the spacer 21 can be, for example, from 5 to 1000 µm, from 50 to 100 µm, or from 65 to 85 µm. The length (m2 in FIG. 5) of the slit 25 can be, for example, from 1.1 to 10 mm, from 1.5 to 4.5 mm, or from 2 to 4 mm. The width of the slit 25 can be, for example, from 1 to 10 mm, from 2 to 3.5 mm, or from 1.5 to 2.5 mm.

### (Third embodiment)

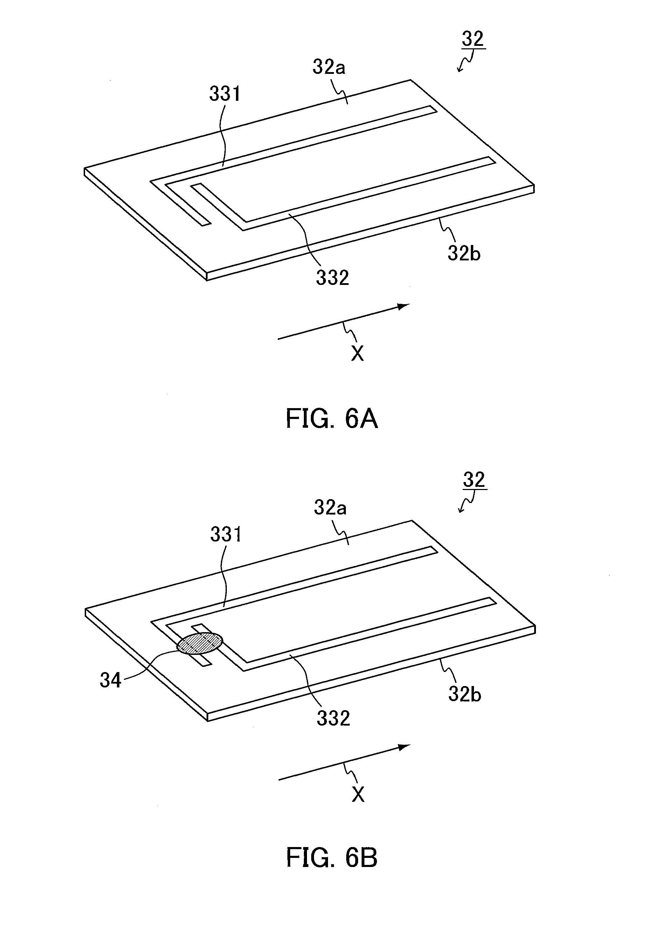

Schematic views of FIGs 6A and 6B show an example of an embodiment including an electrode system as the biosensor according to the present invention. FIGs. 6A and 6B are perspective views of a second substrate of the biosensor. FIG. 6A shows an embodiment having an electrode system, and FIG. 6B shows the embodiment further having a reagent section. In FIGs. 6A and 6B, identical parts to those shown in FIGs. 1 to 5 are denoted by identical numerals. Unless otherwise shown, the third embodiment is the same as the first and second embodiments, and the description of them can be used to describe the third embodiment, for example.

As shown in FIG. 6A, the second substrate 32 has an electrode system composed of a working electrode 331 and a counter electrode 332 on the upper surface 32a of the second substrate 32, i.e., the surface of the second substrate 32 facing the first substrate 11. It is preferred that the electrode system is disposed in a position in which the electrode system is partially in contact with the flow path and is, for example, exposed to the flow path 15 in the biosensor 1 of FIG. 1 and the flow path 25 of the biosensor 2 of FIG. 4. In the present embodiment, as shown in FIG. 6A, the working electrode 331 and the counter electrode 332 are partially parallel to each other in the direction perpendicular to the flow direction (X), whereby exposing to the flow path.

The biosensor may further include a reagent section. In the present embodiment, it is preferred that a reagent section 34 is disposed on a part of the electrode system, i.e., parts of the working electrode 331 and the counter electrode 332 as shown in FIG. 6B. In the biosensor of the present embodiment, the reagent section 34 is exposed to the flow path, for example.

In the case where the reagent section 34 is disposed, for example, on the upper surface 32a of the second substrate 32, the reagent section 34 may be a hydrophilic region, and a region corresponding to the slit 25 of the spacer 21 except the reagent section 34 may be a water-repellent region, for example. In this case, the lower surface of the flow path 25 is caused to be a water-repellent region so that the lower surface except the reagent section 34 becomes a water-repellent region. Thus, a sample introduced into the flow path can be further drawn into the hydrophilic region on the upper surface of the flow path. Thus, it becomes easier to supply the sample into the biosensor. The inner surface of the slit 25 in the spacer 21 may be a water-repellent region.

The biosensor according to the present invention can be used as follows, for example. The following method is merely an example, and the present invention is not limited by this. First, a sample to be supplied into the biosensor is provided. In the case where the sample is, for example, blood, a sample such as blood is collected from a subject using a tool such as a lancet. At that time, the amount of the sample to be collected can be set to the inner volume of the biosensor, i.e., an amount of a sample capable in the biosensor, for example. Then, the liquid sample is caused to be in contact with the sample introduction port of the biosensor. The flow path one end of which is in communication with the introduction port is in communication with the air hole at the other end, so that the capillary phenomenon occurs from the introduction port toward the air hole. Thus, the sample moves from the introduction port toward the air hole in the flow path. Therefore, by providing the flow path with the electrode system and/or the reagent section, a target component in the sample can be analyzed, for example. Since the upper surface on the air hole side of the flow path has a water-repellent region in the biosensor according to the present invention, a movement of the sample moved in the flow path from upstream to downstream in the flow direction is suppressed in the water-repellent region. Thus, the sample can be prevented from leaking out of the air hole to the outside.

Next, the example of the present invention is described. The present invention, however, is not limited by the following example.

### [Example 1]

A biosensor 2 shown in FIG. 4 was produced, and an influence of a leakage of a sample from an air hole was checked. In the biosensor 2, a first substrate was the first substrate 11 shown in FIG. 3B, and a second substrate was the second substrate 32 including an electrode system and a reagent section shown in FIG. 6B.

### (1) Production of biosensor 2

A second substrate 32 including an electrode system was produced. First, a hydrophilic film with a length of 30 mm × a width of 7 mm × a thickness of 0.3 mm, made of polyethylene terephthalate was provided. Then, printing with a carbon ink was performed on the surface of the film. Thus, a working electrode 331 and a counter electrode 332 were formed as an electrode system. Thereafter, a reagent solution was applied to a region on the upstream side of the film, in which the working electrode 331 and the counter electrode 332 are parallel to each other and was then dried. Thus, a reagent section 34 was formed. The reagent solution was prepared by dissolving hexaammineruthenium (III) chloride and glucose oxidase in a buffer solution. The second substrate 32 was produced as described above.

Then, as a spacer 21, a hydrophilic sheet having a slit 25 was disposed on the surface of the second substrate 32 on which the electrode system was formed. The slit 25 of the spacer 21 was a length (m2 in FIG. 5) of 2.48 mm × a width of 1.7 mm × a height of 75 µm and a volume of about 0.3 µL.

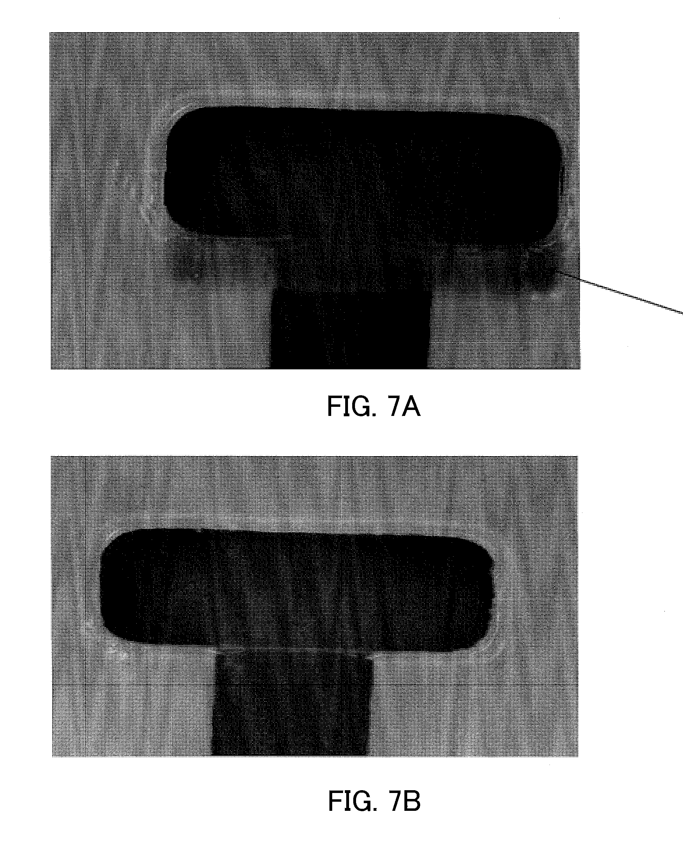

Subsequently, a first substrate 11 was produced. First, a hydrophilic film with a length of 30 mm × a width of 7 mm × a thickness of 0.3 mm, made of polyethylene terephthalate was provided with a through hole 14. Then, printing with a resist ink (ASAHI KAGAKU KOGYO Co., Ltd.) was performed in a region on the upstream side of the through hole 14 in a surface of the film. Thus, a water-repellent region 161 was formed. This was used as the first substrate 11. The through hole 14 had a rectangular shape and was a length of 0.5 mm × a width of 3 mm. The water-repellent region 161 was a length of 1 mm × a width of 4 mm. FIG. 7A shows a photograph of the periphery of the through hole (air hole) 14 in the first substrate 11. In FIG. 7A, an arrow part shows the water-repellent region 161.

Then, the first substrate 11 was attached to the spacer 21 on the second substrate 32 so that the surface 11b of the first substrate 11, on which the water-repellent region 161 had been formed faced the spacer 21. The first substrate 11 except regions of a sample introduction port 23, a flow path 25, and the air hole 14 was attached to the spacer 21 with a double-sided tape. This was used as a biosensor 2.

### (2) Measurement of glucose

Glucose was dissolved in an ACES buffer so as to have a final concentration of 350 mg/100 ml. Thus, a glucose sample was prepared. Then, the glucose sample was introduced into each sample introduction port 23 of the 360 biosensors (n = 360), and currents were measured using an ammeter. Furthermore, a coefficient of variation (C.V. (%)) in quantitative value was calculated from the measurement values by the 360 biosensors.

### [Comparative Example 1]

A biosensor was produced in the same manner as in Example 1 except that a water-repellent region 161 was not formed in a first substrate 11. FIG. 7B shows a photograph of the periphery of the through hole (air hole) 14 of the first substrate in the biosensor of Comparative Example 1.

Currents were measured in the same manner as in Example 1 using the 360 biosensors. Furthermore, a coefficient of variation (C.V. (%)) in quantitative value was calculated.

The results of these are shown in Table 1 below. As shown in Table 1, according to the biosensor of Example 1, the C.V. could be reduced one-fourth of the C.V. of Comparative Example 1. This demonstrates that the glucose sample introduced into the flow path could sufficiently be prevented from flowing out of the air hole in the biosensor of Example 1. Thus, according to the biosensor of the present invention, a sample can be prevented from leaking out of the air hole, so that analysis can be performed with superior accuracy.

**[Table 1]**

| | C.V. (%) |
|---|---|
| Example 1 | 2.5 |
| Comparative Example 1 | 10.5 |

While the present invention has been described above with reference to illustrative embodiments, the present invention is by no means limited thereto. Various changes and modifications that may become apparent to those skilled in the art may be made in the configuration and specifics of the present invention without departing from the scope of the present invention.

This application is based upon and claims the benefit of priority from Japanese patent application No. 2012-114787, filed on May 18, 2012, the disclosure of which is incorporated herein in its entirety by reference.

### Industrial Applicability

According to the biosensor of the present invention, a sample can be prevented from flowing out of the air hole to the outside with superior accuracy, for example. Therefore, according to the biosensor of the present invention, a target can be analyzed with superior accuracy. Thus, the present invention is really useful in a clinical field, a biochemical field, and the like.

## Claims

1. A biosensor comprising:
a first substrate having an air hole; and
a second substrate, the first and second substrates being laminated on each other, wherein
the biosensor has a sample flow path between the first and second substrates,
in a sample flow direction in the flow path, an upstream end of the flow path is in communication with a sample introduction port, and a downstream end of the flow path is in communication with the air hole,
an upper surface of the flow path is formed of a surface of the first substrate facing the second substrate, and
a region on the introduction port side of the upper surface of the flow path is a hydrophilic region, and a region on the air hole side of the upper surface of the flow path is a water-repellent region.

2. The biosensor according to claims 1, further comprising:
a spacer having a slit, wherein
the first and second substrates are laminated on each other via the spacer,
a space formed of the slit of the spacer is the sample flow path, and
an opening formed of the first and second substrates and the slit of the spacer is the sample introduction port.

3. The biosensor according to claim 1 or 2, wherein
the periphery of the air hole on the surface of the first substrate facing the second substrate has the water-repellent region.

4. The biosensor according to any one of claims 1 to 3, wherein
the flow path has a reagent section containing a reagent.

5. The biosensor according to any one of claims 1 to 4, wherein
the second substrate has an electrode system, and
a part of the electrode system is exposed to the sample flow path.

6. The biosensor according to claim 5, wherein
the second substrate has a reagent section containing a reagent, and
the reagent section is present on the exposed part of the electrode system of the second substrate.

7. The biosensor according to any one of claims 4 to 6, wherein
the lower surface of the flow path is formed of a surface of the second substrate facing the first substrate, and
a region of the lower surface of the flow path except the reagent section is the water-repellent region.

8. The biosensor according to any one of claims 5 to 7, wherein
a region of the upper surface of the flow path, from the introduction port to the electrode system is the hydrophilic region, and
a region of the upper surface of the flow path, from the downstream end of the hydrophilic region to the air hole is the water-repellent region.

9. The biosensor according to any one of claims 1 to 8, wherein
a volume from the introduction port to the air hole in the flow path is in a range from 0.1 to 10 µL.

10. The biosensor according to any one of claims 1 to 9, wherein
a relationship between the width (w1) of the flow path and the width (w2) of the air hole satisfies w1 < w2.

11. A method of making a biosensor comprising:
providing a first substrate having an air hole;
providing a second substrate,
laminating the first and second substrates on each other,
wherein the biosensor has a sample flow path between the first and second substrates, in a sample flow direction in the flow path, an upstream end of the flow path is in communication with a sample introduction port, and a downstream end of the flow path is in communication with the air hole, and an upper surface of the flow path is formed of a surface of the first substrate facing the second substrate,
making a region on the introduction port side of the upper surface of the flow path hydrophilic, and
making a region on the air hole side of the upper surface of the flow path water-repellent.
